# FASCICULE DE BREVET EUROPEEN

(11) **EP 2 268 901 B1**
(45) Date de publication et mention de la délivrance du brevet: **17.05.2017**
(21) Numéro de dépôt: 09721392.0
(22) Date de dépôt: 04.03.2009
(51) Int. Cl.: F01D 5/20, F01D 5/18

(54) **AUBE DE TURBINE, TURBINE ET TURBOMACHINE ASSOCIÉES**
TURBINENSCHAUFEL, ZUGEHÖRIGE TURBINE UND TURBOMASCHINE
TURBINE BLADE, CORRESPONDING TURBINE AND TURBOMACHINE

(30) Priorité: 05.03.2008 FR 0851424
(43) Date de publication de la demande: 05.01.2011
(73) Titulaire: Snecma, 75015 Paris (FR)
(72) Inventeur: BOTREL, Erwan, F-94140 Alfortville (FR); GROHENS, Régis, F-77220 Tournan en Brie (FR)
(74) Mandataire: Intès, Didier Gérard André
(86) Numéro de dépôt international: PCT/FR2009/050347
(87) Numéro de publication internationale: WO 2009/115728

(56) Documents cités:
- EP-A- 0 718 467
- EP-A- 1 221 537
- EP-A- 1 693 552
- DE-A1- 19 904 229
- FR-A- 2 457 967

## Description

L'invention concerne une aube de turbine et, plus particulièrement, peut concerner une aube creuse de rotor de turbine à gaz, de type haute pression, de turboréacteur.

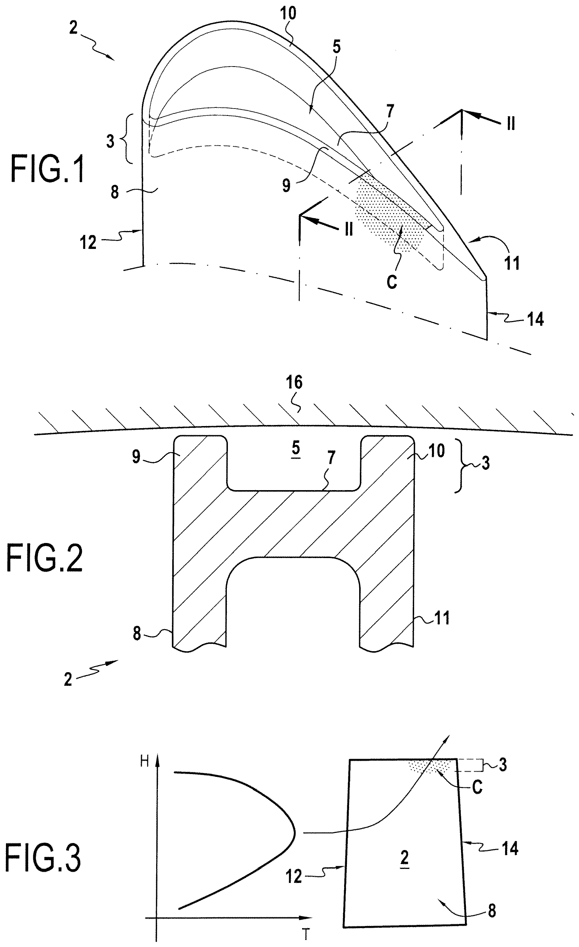

Comme représenté sur les figures 1 et 2, il est connu de prévoir à l'extrémité distale 3 d'une aube creuse 2, une cavité ouverte 5, ou "baignoire", délimitée par une paroi de fond 7 qui s'étend sur toute l'extrémité de l'aube et par une paroi latérale composée de deux rebords 9 et 10. Ces rebords s'étendent entre le bord d'attaque 12 et le bord de fuite 14 de l'aube. Le rebord 9 prolonge la paroi côté intrados 8 de l'aube et l'autre rebord 10 prolonge la paroi côté extrados 11 de l'aube. Ces rebords sont appelés ci-après rebords d'intrados et d'extrados.

Les rebords 9 et 10 permettent d'assurer une zone d'usure entre la paroi de fond 7 et le carter 16 qui permet d'absorber les contacts entre l'extrémité distale de l'aube 3 et le carter 16. De plus, ils permettent de limiter le passage de gaz de l'intrados vers l'extrados générateur de pertes aérodynamiques préjudiciables au rendement. Du fait des hautes températures des gaz traversant la turbine et des vitesses de rotation élevées de l'aube, les parois de l'aube et de la cavité 5 peuvent atteindre localement des températures critiques.

Le document EP 1 221 537 propose de refroidir ces parois en opérant une ouverture sur la paroi latérale de la cavité au voisinage du bord d'attaque de l'aube, préférentiellement du côté extrados. De plus cette ouverture peut éventuellement présenter un petit rebord interne qui canalise les gaz entrant dans la cavité par ladite ouverture. Cependant la solution proposée par ce document ne permet pas de refroidir suffisamment certaines zones de la cavité.

En effet, le gradient des températures T des gaz au voisinage de l'aube selon la hauteur H de la veine des gaz (figure 3) est particulièrement pénalisant pour certaines zones de la cavité. Ainsi, ce gradient des températures conjugué à la topologie de l'écoulement des gaz le long de l'aube, fait que les gaz les plus chauds impactent la zone critique C de l'aube. Cette zone C est située à l'extrémité 3 de l'aube au voisinage du bord de fuite 14, côté intrados 8.

Le document EP 0 718 467 A1 divulgue l'art antérieur.

Le but de la présente invention est d'améliorer le refroidissement de cette zone et de l'ensemble de la cavité ouverte de l'extrémité distale d'une aube de turbine. Plus particulièrement, la présente invention se propose d'améliorer le refroidissement local de la zone située au sommet de l'aube, au voisinage du bord de fuite, côté intrados.

Pour atteindre ce but, l'invention a pour objet une aube de turbine présentant une cavité ouverte à son extrémité distale, ladite cavité étant délimitée par une paroi de fond et une paroi latérale s'étendant le long du périmètre de ladite extrémité distale dans le prolongement des parois intrados et extrados de l'aube, la paroi latérale de la cavité présentant une ouverture au voisinage du bord d'attaque de l'aube débouchant dans la cavité et, un déflecteur s'étendant au moins dans la portion médiane de la cavité entre le bord d'attaque et le bord de fuite.

L'avantage d'une telle aube est que le déflecteur permet d'orienter le flux de gaz relativement moins chaud (voir figure 3), entré dans la cavité par l'ouverture de la paroi latérale, directement vers une zone préférentielle des parois de la cavité. Ce courant de gaz impacte cette zone préférentielle et permet un refroidissement par convection accru de cette dernière. Le but est d'orienter une quantité optimisée de gaz sur une zone particulièrement sollicitée du point de vue thermique. Ainsi, en plus de refroidir correctement cette dernière zone, il est possible d'obtenir un refroidissement homogène de l'ensemble des parois de la cavité.

L'invention concerne également une turbine comprenant au moins une aube selon l'invention et une turbomachine, telle qu'un turboréacteur d'avion, comprenant au moins une telle turbine.

L'invention et ses avantages seront mieux compris à la lecture de la description détaillée qui suit de différents modes de réalisation représentés à titre d'exemples non limitatifs. Cette description fait référence aux figures annexées, sur lesquelles :
- la figure 1 est une vue en perspective de l'extrémité distale d'une aube connue,
- la figure 2 est une vue de l'aube de la figure 1 selon le plan de coupe II,
- la figure 3 est une représentation graphique de l'évolution du gradient de température T des gaz sur la hauteur H de la veine des gaz au voisinage d'une aube,
- le figure 4 est une vue en perspective d'un premier mode de réalisation d'une aube selon l'invention,
- le figure 5 est une vue en perspective d'un second mode de réalisation d'une aube selon l'invention,
- le figure 6 est une vue en perspective d'un troisième mode de réalisation d'une aube selon l'invention.

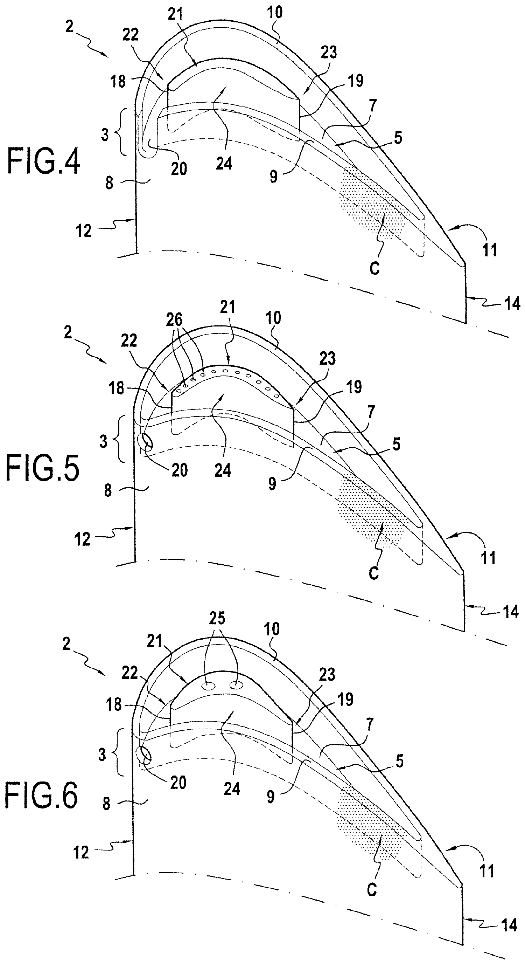

Un premier mode de réalisation de l'invention est décrit en référence à la figure 4. Dans ce mode de réalisation, l'ouverture 20 de la paroi latérale 9, 10 de la cavité 5 est située au voisinage du bord d'attaque 12 de l'aube 2, côté intrados 8. Sans être restrictive, cette position d'ouverture 20 permet de prélever les gaz de refroidissement (c'est-à-dire sensiblement moins chaud) dans la partie extérieure de la veine des gaz de manière particulièrement efficace. Bien évidemment, selon la géométrie de l'aube et l'angle d'incidence des gaz, l'ouverture 20 peut-être placée plus en aval sur le rebord intrados 9 ou bien de l'autre côté sur le rebord extrados 10.

Dans cet exemple, l'ouverture 20 de la paroi latérale 9, 10 de la cavité 5 est une échancrure. Cette échancrure peut avoir une hauteur variable selon différents modes de réalisations. Ici, l'échancrure s'étend sur toute la hauteur de la paroi latérale 9, 10 de la cavité 5. Cette hauteur d'échancrure présente l'avantage, pour une largeur donnée, de fournir à la cavité un débit de gaz maximum.

Dans ce premier mode de réalisation, le déflecteur 21 présente plusieurs caractéristiques intéressantes. Le déflecteur 21 est sensiblement perpendiculaire à la paroi de fond 7 de la cavité 5. Ce positionnement du déflecteur 21 par rapport à la paroi de fond 7 de la cavité 5 améliore l'orientation du gaz vers la zone C à refroidir.

La face active 24 du déflecteur 21 est concave, la concavité du déflecteur 21 ayant sensiblement la même orientation que la concavité de l'aube 2. De la sorte, le déflecteur 21 présente un double avantage. Tout d'abord, pour une longueur donnée, un déflecteur concave s'inscrit de manière optimale dans la cavité 5. Ensuite, cela permet au déflecteur 21 d'imposer au flux de gaz une ligne de courant qui épouse au mieux la forme du rebord intrados 9 de la cavité 5. Ainsi tout en orientant le flux de gaz de refroidissement vers la zone C, d'autres zones de la cavité 5 sont également refroidies par ce courant de gaz de refroidissement qui circule le long du rebord intrados 9. Bien sûr la concavité du déflecteur 21 n'est pas limitée à l'exemple représenté et peut être avantageusement ajustée à chaque type d'aube.

L'extrémité amont 18 du déflecteur 21 est distante du bord d'attaque 12 de l'aube 2. De même l'extrémité aval 19 du déflecteur 21 est distante du bord de fuite 14 de l'aube 2. Ces distances par rapport aux bords d'attaque et de fuite permettent d'ajuster l'orientation du flux et la quantité de gaz de refroidissement guidée. Les distances relatives du déflecteur par rapport aux rebords intrados 9 et extrados 10 sont également des paramètres importants qui permettent d'optimiser un tel système.

Toujours en référence à la figure 4, la partie amont 22 du déflecteur 21 est orientée vers le bord d'attaque 12 de l'aube 2. De la même manière, la partie aval 23 du déflecteur 21 est orientée vers le bord de fuite 14 de l'aube 2. Ces orientations des parties amont 22 et aval 23 du déflecteur 21 sont avantageuses pour le guidage du flux de gaz de refroidissement vers la zone C. De plus, ces orientations permettent d'imposer au flux de gaz des lignes de courant particulièrement efficaces pour l'homogénéité du refroidissement de l'ensemble des parois de la cavité 5.

Un second mode de réalisation de l'invention est décrit en référence à la figure 5. Dans cet exemple, l'ouverture 20 de la paroi latérale 9, 10 de la cavité 5 est un trou. La forme cylindrique du trou représenté sur cet exemple n'est pas limitative. Le trou peut être, entre autre, de forme oblongue ou triangulaire. Comme ouverture de paroi latérale de la cavité 5, le trou présente l'avantage de pouvoir ajuster de manière précise le débit de gaz de refroidissement entrant dans la cavité 5.

Ce second exemple représente une aube creuse 2 alimentée en gaz de refroidissement et, le déflecteur 21 comporte des trous de refroidissement 26 communicant avec au moins une partie creuse de l'aube. Ces trous de refroidissement sont des perçages radiaux dans le déflecteur 21. Ils débouchent dans une cavité interne de l'aube 2 située sous le déflecteur 21. Le refroidissement du déflecteur 21 est ainsi assuré par pompage et conduction thermique. De plus, le refroidissement du déflecteur 21 permet de venir abaisser par convection la température des gaz déviés par celui-ci, augmentant par conséquent l'efficacité thermique du système.

Un troisième mode de réalisation de l'invention est décrit en référence à la figure 6. Ce troisième exemple représente une aube creuse 2 alimentée en gaz de refroidissement et, le déflecteur 21 comporte des trous de dépoussiérage 25 communicant avec au moins une partie creuse de l'aube. Ces trous de dépoussiérage sont similaires aux trous de refroidissement et assurent, comme ces derniers, le refroidissement de la cavité 5. Cependant, leur diamètre est plus important que celui des trous de refroidissement classique. Le diamètre plus important des trous de dépoussiérage permet l'évacuation de poussières éventuellement présentes dans la ou les cavité(s) interne(s) de l'aube. Ainsi, sur un déflecteur présentant les deux types de trous, les poussières passeront préférentiellement par les trous de dépoussiérage plutôt que par les trous de refroidissement plus étroits. On évite donc l'obturation des trous de refroidissement de faible diamètre.

Du fait du diamètre important de ces trous de dépoussiérage, il est nécessaire que le déflecteur 21 présente une épaisseur plus importante que dans les exemples précédents.

## Revendications

1. Aube (2) de turbine présentant une cavité ouverte (5) à son extrémité distale (3), ladite cavité (5) étant délimitée par une paroi de fond (7) et une paroi latérale (9, 10) s'étendant le long du périmètre de ladite extrémité distale (3) dans le prolongement des parois intrados (8) et extrados (11) de l'aube (2), la paroi latérale (9, 10) de la cavité (5) présentant une ouverture (20) au voisinage du bord d'attaque (12) de l'aube (2) débouchant dans la cavité (5), **caractérisée en ce qu'**un déflecteur (21) s'étend au moins dans la portion médiane de la cavité (5) entre le bord d'attaque (12) et le bord de fuite (14).

2. Aube selon la revendication 1, **caractérisée en ce que** l'ouverture (20) de la paroi latérale (9, 10) de la cavité (5) est située au voisinage du bord d'attaque (12) de l'aube (2), côté intrados (8).

3. Aube selon la revendication 1 ou 2, **caractérisée en ce que** le déflecteur (21) est sensiblement perpendiculaire à la paroi de fond (7) de la cavité (5).

4. Aube selon l'une quelconque des revendications 1 à 3, **caractérisée en ce que** la face active (24) du déflecteur (21) est concave, la concavité du déflecteur (21) ayant sensiblement la même orientation que la concavité de l'aube (2).

5. Aube selon l'une quelconque des revendications 1 à 4, **caractérisée en ce qu'**une extrémité amont (18) du déflecteur (21) est distante du bord d'attaque (12) de l'aube (2).

6. Aube selon l'une quelconque des revendications 1 à 5, **caractérisée en ce qu'**une extrémité aval (19) du déflecteur (21) est distante du bord de fuite (14) de l'aube (2).

7. Aube selon l'une quelconque des revendications 1 à 6, **caractérisée en ce que** la partie amont (22) du déflecteur (21) est orientée vers le bord d'attaque (12) de l'aube (2).

8. Aube selon l'une quelconque des revendications 1 à 7, **caractérisée en ce que** la partie aval (23) du déflecteur (21) est orientée vers le bord de fuite (14) de l'aube (2).

9. Aube selon l'une quelconque des revendications 1 à 8, **caractérisée en ce que** l'ouverture (20) de la paroi latérale (9, 10) de la cavité (5) est un trou.

10. Aube selon l'une quelconque des revendications 1 à 8, **caractérisée en ce que** l'ouverture (20) de la paroi latérale (9, 10) de la cavité (5) est une échancrure.

11. Aube selon l'une quelconque des revendications 1 à 10, **caractérisée en ce qu'**elle est creuse et alimentée en gaz de refroidissement et **en ce que** le déflecteur (21) comporte des trous de refroidissement (26) communicant avec au moins une partie creuse de l'aube (2).

12. Aube selon l'une quelconque des revendications 1 à 11, **caractérisée en ce qu'**elle est creuse et alimentée en gaz de refroidissement et **en ce que** le déflecteur (21) comporte des trous de dépoussiérage (25) communicant avec au moins une partie creuse de l'aube (2).

13. Turbine, **caractérisée en ce qu'**elle comporte au moins une aube selon l'une quelconque des revendications 1 à 12.

14. Turbomachine, telle qu'un turboréacteur d'avion, **caractérisée en ce qu'**elle comprend au moins une turbine selon la revendication 13.

## Patentansprüche

1. Turbinenschaufel (2), die einen offenen Hohlraum (5) an ihrem distalen Ende (3) aufweist, wobei der Hohlraum (5) von einer Bodenwand (7) und einer Seitenwand (9, 10) begrenzt ist, die sich entlang des Umfangs des distalen Endes (3) in der Verlängerung der Unterseite (8) und Oberseite (11) der Schaufel (2) erstrecken, wobei die Seitenwand (9, 10) des Hohlraums (5) eine Öffnung (20) in der Nähe der Vorderkante (12) der Schaufel (2) aufweist, die in den Hohlraum (5) mündet, **dadurch gekennzeichnet, dass** sich ein Deflektor (21) zumindest in dem Mittelabschnitt des Hohlraums (5) zwischen der Vorderkante (12) und der Hinterkante (14) erstreckt.

2. Schaufel gemäß Anspruch 1, **dadurch gekennzeichnet, dass** die Öffnung (20) der Seitenwand (9, 10) des Hohlraums (5) in der Nähe der Vorderkante (12) der Schaufel (2) auf der Unterseite (8) angeordnet ist.

3. Schaufel gemäß Anspruch 1 oder 2, **dadurch gekennzeichnet, dass** der Deflektor (21) im Wesentlichen senkrecht auf die Bodenwand (7) des Hohlraums (5) ist.

4. Schaufel gemäß einem der Ansprüche 1 bis 3, **dadurch gekennzeichnet, dass** die aktive Fläche (24) des Deflektors (21) konkav ist, wobei die Konkavität des Deflektors (21) im Wesentlichen dieselbe Ausrichtung wie die Konkavität der Schaufel (2) hat.

5. Schaufel gemäß einem der Ansprüche 1 bis 4, **dadurch gekennzeichnet, dass** ein stromaufwärtiges Ende (18) des Deflektors (21) von der Vorderkante (12) der Schaufel (2) entfernt ist.

6. Schaufel gemäß einem der Ansprüche 1 bis 5, **dadurch gekennzeichnet, dass** ein stromabwärtiges Ende (19) des Deflektors (21) von der Hinterkante (14) der Schaufel (2) entfernt ist.

7. Schaufel gemäß einem der Ansprüche 1 bis 6, **dadurch gekennzeichnet, dass** der stromaufwärtige Teil (22) des Deflektors (21) zur Vorderkante (12) der Schaufel (2) gerichtet ist.

8. Schaufel gemäß einem der Ansprüche 1 bis 7, **dadurch gekennzeichnet, dass** der stromabwärtige Teil (23) des Deflektors (21) zur Hinterkante (14) der Schaufel (2) gerichtet ist.

9. Schaufel gemäß einem der Ansprüche 1 bis 8, **dadurch gekennzeichnet, dass** die Öffnung (20) der Seitenwand (9, 10) des Hohlraums (5) ein Loch ist.

10. Schaufel gemäß einem der Ansprüche 1 bis 8, **dadurch gekennzeichnet, dass** die Öffnung (20) der Seitenwand (9, 10) des Hohlraums (5) ein bogenförmiger Ausschnitt ist.

11. Schaufel gemäß einem der Ansprüche 1 bis 10, **dadurch gekennzeichnet, dass** sie hohl ist und mit Kühlgas versorgt wird, und dass der Deflektor (21) Kühllöcher (26) umfasst, die mit mindestens einem hohlen Teil der Schaufel (2) in Verbindung stehen.

12. Schaufel gemäß einem der Ansprüche 1 bis 11, **dadurch gekennzeichnet, dass** sie hohl ist und mit Kühlgas versorgt wird, und dass der Deflektor (21) Entstaubungslöcher (25) umfasst, die mit mindestens einem hohlen Teil der Schaufel (2) in Verbindung stehen.

13. Turbine, **dadurch gekennzeichnet, dass** die mindestens eine Schaufel gemäß einem der Ansprüche 1 bis 12 umfasst.

14. Turbomaschine, wie ein Flugzeug-Turboreaktor, **dadurch gekennzeichnet, dass** sie mindestens eine Turbine gemäß Anspruch 13 umfasst.

## Claims

1. A turbine blade (2) having an open cavity (5) at its distal tip (3), said cavity (5) being defined by a bottom wall (7) and a side wall (9, 10) extending along the perimeter of said distal tip (3) in the extension of the pressure side (8) and suction side (11) walls of the blade (2), the side wall (9, 10) of the cavity (5) having an opening (20) in the vicinity of the leading edge (12) of the blade (2) opening into the cavity (5), **characterized in that** a deflector (21) extends at least in the median portion of the cavity (5) between the leading edge (12) and the trailing edge (14).

2. The blade according to claim 1, **characterized in that** the opening (20) of the side wall (9, 10) of the cavity (5) is situated in the vicinity of the leading edge (12) of the blade (2), on the pressure side (8).

3. The blade according to claim 1 or 2, **characterized in that** the deflector (21) is essentially perpendicular to the bottom wall (7) of the cavity (5).

4. The blade according to any one of claims 1 to 3, **characterized in that** the active face (24) of the deflector (21) is concave, the concavity of the deflector (21) having essentially the same orientation as the concavity of the blade (2).

5. The blade according to any one of claims 1 to 4, **characterized in that** an upstream tip (18) of the deflector (21) is distant from the leading edge (12) of the blade (2).

6. The blade according to any one of claims 1 to 5, **characterized in that** an downstream tip (19) of the deflector (21) is distant from the trailing edge (14) of the blade (2).

7. The blade according to any one of claims 1 to 6, **characterized in that** the upstream portion (22) of the deflector (21) is oriented toward the leading edge (12) of the blade (2).

8. The blade according to any one of claims 1 to 7, **characterized in that** the downstream portion (23) of the deflector (21) is oriented toward the trailing edge (14) of the blade (2).

9. The blade according to any one of claims 1 to 8, **characterized in that** the opening (20) of the side wall (9, 10) of the cavity (5) is a hole.

10. The blade according to any one of claims 1 to 8, **characterized in that** the opening (20) of the side wall (9, 10) of the cavity (5) is a recess.

11. The blade according to any one of claims 1 to 10, **characterized in that** it is hollow and supplied with cooling gas and **in that** the deflector (21) includes cooling holes (26) connected with at least one hollow portion of the blade (2).

12. The blade according to any one of claims 1 to 11, **characterized in that** it is hollow and supplied with cooling gas and **in that** the deflector (21) includes dust extraction holes (25) communicating with at least one hollow portion of the blade (2).

13. A turbine, **characterized in that** it includes at least one blade according to any one of claims 1 to 12.

14. A turbomachine, such as an airplane turbojet engine, **characterized in that** it comprises at least one turbine according to claim 13.
